# EUROPÄISCHE PATENTSCHRIFT

(11) **EP 2 655 040 B1**
(45) Veröffentlichungstag und Bekanntmachung des Hinweises auf die Patenterteilung: **26.07.2017**
(21) Anmeldenummer: 11801568.4
(22) Anmeldetag: 14.11.2011
(51) Int. Cl.: B29C 49/46, B29C 49/42

(54) **VERFAHREN UND VORRICHTUNG ZUR BLASFORMUNG VON STERILEN BEHÄLTERN**
PROCESS AND DEVICE FOR BLOW MOULDING STERILE CONTAINERS
PROCÉDÉ ET DISPOSITIF POUR LE MOULAGE PAR SOUFFLAGE DE RÉCIPIENTS STÉRILES

(30) Priorität: 23.12.2010 DE 102010056450
(43) Veröffentlichungstag der Anmeldung: 30.10.2013
(73) Patentinhaber: KHS Corpoplast GmbH, 22145 Hamburg (DE)
(72) Erfinder: HEROLD, Thomas, 22926 Ahrensburg (DE); RIEGER, Harald, 22303 Hamburg (DE); KLATT, Dieter, 22147 Hamburg (DE); GERHARDS, Martin, 22089 Hamburg (DE)
(74) Vertreter: Hausfeld, Norbert
(86) Internationale Anmeldenummer: PCT/DE2011/002016
(87) Internationale Veröffentlichungsnummer: WO 2012/083910

(56) Entgegenhaltungen:
- EP-A2- 2 412 511
- WO-A2-2012/007862
- DE-A1-102007 017 938

## Beschreibung

Die Erfindung betrifft ein Verfahren zur Herstellung von blasgeformten mindestens bereichsweise sterilen Behältern, bei dem ein Vorformling aus einem thermoplastischen Material zunächst erwärmt und dann mit einem unter Druck stehenden Fluid beaufschlagt wird sowie bei dem ein Sterilisationsmittel in den Bereich des Vorformlings zugeführt wird, wobeidas Sterilisieren mit einem räumlichen Abstand zu einer den Vorformling verformenden Blasstation durchgeführt wird.

Darüber hinaus betrifft die Erfindung eine Vorrichtung zur Herstellung von mindestens bereichsweise sterilen blasgeformten Behältern, die eine Zuführeinrichtung zur Beaufschlagung mindestens eines Teiles eines Vorformlings mit einem Sterilisationsmittel aufweist, sowie die mit einer Heizstrecke zur Temperierung der Vorformlinge und einer Blaseinrichtung zur Blasverformung der Vorformlinge in die Behälter versehen ist, wobei eine den Vorformling mit dem Sterilisationsmittel beaufschlagende Sterilisiereinrichtung mit einem räumlichen Abstand zur Blaseinrichtung angeordnet ist.

Eine Herstellung von sterilen blasgeformten Behältern erfolgt typischerweise derart, daß diese Behälter nach ihrer Blasformung und vor einer Befüllung unter Verwendung von Wasserstoffperoxid oder anderen Chemikalien sterilisiert werden. Ebenfalls ist es
bereits bekannt, die bei der Blasformung der Behälter als Ausgangsprodukt verwendeten Vorformlinge zu sterilisieren, insbesondere den Bereich der inneren Oberfläche dieser vorformlinge.

Bei einer Behälterformung durch Blasdruckeinwirkung werden Vorformlinge aus einem thermoplastischen Material, beispielsweise Vorformlinge aus PET (Polyethylenterephtalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert.

Der grundsätzliche Aufbau einer Blasstation zur Behälterformung wird in der DE-OS 42 12 583 beschrieben. Möglichkeiten zur Temperierung der Vorformlinge werden in der DE -OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen.

Eine Handhabung von Behältern unter Verwendung von Übergaberädern wird beispielsweise in der DE-OS 199 06 438 bei einer Anordnung des Übergaberades zwischen einem Blasrad und einer Ausgabestrecke beschrieben. Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgußtechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Hinsichtlich der Sterilisierung von Vorformlingen sind aus dem Stand der Technik bereits unterschiedliche Verfahren und Vorrichtungen bekannt, die jedoch alle verfahrensspezifische Nachteile aufweisen, die einer zuverlässigen Sterilisierung der Vorformlinge bei gleichzeitig hohen Durchsatzraten entgegenstehen.

Aus DE 10 2007 017 938 A1 ist ein Verfahren und eine Vorrichtung zur Herstellung von blasgeformten Behältern bekannt, bei denen ein Sterilisationsmittel in den Bereich eines Vorformlings zugeführt wird, wobei das Sterilisieren mit einem räumlichen Abstand zu einer den Vorformling verformenden Blasstation durchgeführt wird.

In der EP-A 1 086 019 wird beispielsweise die Sterilisierung von heißen Vorformlingen mit einem heißen gasförmigen Sterilisationsmittel beschrieben. Es werden hintereinander angeordnete separate Behandlungsstationen verwendet, nämlich ein erstes Heizmodul, ein Sterilisiermodul sowie ein zweites Heizmodul. Nachteilig ist hierbei das Temperaturverhalten des Vorformlings während des Sterilisiervorganges sowie das unkontrollierte Austreten des Sterilisationsmittels aus dem Vorformling innerhalb der Heizung.

Die DE 10 2008 038 141 A1 zeigt ein Verfahren und eine Vorrichtung zur Herstellung blasgeformter mindestens bereichsweise steriler Behälter, bei der Vorformlinge sterilisiert und anschließend zu den Blasstationen transportiert werden. Die Blasstationen und auch die Transporteinrichtungen sind dabei in einem Reinraum angeordnet. Einen gleichen Stand der Technik zeigt auch die DE 10 2009 015 519 A1.

In der EP-A 1 896 245 wird ein Verfahren beschrieben, bei dem vor der Heizung ein gasförmiges Sterilisationsmittel in einen kalten vorformling eingeleitet wird und hier kondensiert. Problematisch ist hier die Sicherstellung einer vollständigen Kondensatbildung auf der gesamten Innenfläche des Vorformlings, da das einströmende heiße Sterilisationsmittel die Innenwandtemperatur des Vorformlings erhöht. Darüber hinaus tritt auch hier das Sterilisationsmittel nach seiner Verdampfung im Bereich der Heizung unkontrolliert innerhalb der Heizung aus dem Vorformling aus.

In der EP-A 2 138 298 wird eine Vorrichtung beschrieben, bei der vorsorglich sowohl vor dem verwendeten Blasmodul als auch hinter dem verwendeten Blasmodul Sterilisiereinrichtungen angeordnet sind. Hieraus resultiert ein sehr großer maschinenbaulicher Aufwand.

In der WO 2010/020530 A1 wird die Anordnung einer Sterilisiereinrichtung zwischen einer Heizung und dem Blasmodul beschrieben. Bei diesem Verfahren ist die Eintragsmenge von Sterilisationsmittel in den Bereich des Blasmoduls nur schwer vorhersehbar. Darüber hinaus ist die Austrittsmenge an Sterilisationsmittel in die Umgebung nicht kontrollierbar und eine entsprechende Kontamination nicht ausgeschlossen.

Nach einer erfolgten Sterilisierung und Beheizung der Vorformlinge werden diese einer Blaseinrichtung zugeführt und dort unter Verwendung von steriler Blasluft in die Behälter umgeformt. Gemäß dem bekannten Stand der Technik wird hierzu der gesamte Bereich der Blaseinrichtung als Sterilraum ausgeführt. Die Bereitstellung und Aufrechterhaltung eines derart räumlich großen Sterilraumes erfordert einen sehr hohen gerätetechnischen Aufwand. Darüber hinaus besitzt dieser räumlich groß ausgedehnte Bereich eine Vielzahl potentieller Kontaminationsstellen, so daß eine ausreichende Sterilität nur äußerst schwer sichergestellt werden kann.

Aufgabe der vorliegenden Erfindung ist es, ein Verfahren der einleitend genannten Art derart zu verbessern, daß in einfacher Weise eine ausreichende Sterilität gewährleistet werden kann.

Weitere Aufgabe der vorliegenden Erfindung ist es, eine Vorrichtung der einleitend genannten Art derart zu konstruieren, daß eine effektive Sterilität mit geringem Aufwand gewährleistet ist.

Diese Aufgabe wird gemäss Ansprüchen 1 und 7 gelöst. Durch die Verbindung der Sterilisiereinheit und der Blaseinrichtung durch einen sterilen Kanal entfällt die Notwendigkeit der Bereitstellung eines räumlich ausgedehnten Sterilraumes. Insbesondere ist es nicht mehr erforderlich, im Bereich des Blasmoduls, das typischerweise ein rotierendes Blasrad aufweist, mit Fett und sonstigen Betriebsmitteln kontaminierte Bereiche steril zu halten. Es ist vielmehr ausreichend, den unmittelbar mit kritischen Bereichen des Vorformlings bzw. des geblasenen Behälters in Kontakt stehenden Bereich zu sterilisieren und steril zu halten. Es wird hierdurch zum Einen wesentlich der Aufwand für die Sterilisierung und die Aufrechterhaltung der Sterilisierung vermindert, darüber hinaus wird die Gefahr einer Kontamination erheblich reduziert, da die Größe von Grenzflächen zwischen dem Sterilbereich und dem Umgebungsbereich minimiert wird.

Zur Aufrechterhaltung der Sterilität der Vorformlinge wird vorgeschlagen, daß der Vorformling innerhalb des Kanals von einem sterilen Gas beaufschlagt wird, wobei das sterile Gas in Richtung auf einen Mündungsabschnitt des Vorformlings geleitet wird.

Ein Zutritt von Keimen wird wirksam dadurch verhindert, daß mindestens ein Teil des sterilen Gases innerhalb des Kanals mit einer Ausbreitungskomponente einer Strömung in einer Längsrichtung des Kanals strömt.

Ein steriler Übergabebereich für ein Einsetzen der Vorformlinge in die Blaseinrichtung wird dadurch bereitgestellt, daß das sterile Gas mit einer Ausbreitungskomponente in Richtung auf die Blaseinrichtung strömt.

Zur Unterstützung einer sterilen Handhabung der fertigen Behälter wird vorgeschlagen, daß die blasgeformten Behälter nach einer Entnahme aus der Blaseinrichtung mindestens abschnittsweise und mindestens bereichsweise entlang eines sterilen Kanals transportiert werden.

Insbesondere ist daran gedacht, daß durch den sterilen Kanal die Blaseinrichtung mit einer Fülleinrichtung verbunden wird.

In den Zeichnungen sind Ausführungsbeispiele der Erfindung schematisch dargestellt. Es zeigen:
- Fig. 1: Eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur Veranschaulichung eines grund-sätzlichen Aufbaus einer Vorrichtung zur Blas-formung von Behältern,
- Fig. 4: eine modifizierte Heizstrecke mit vergrößerter Heizkapazität,
- Fig. 5: eine schematische Darstellung eines Heizmoduls einer Blasmaschine, bei der im Bereich des Heizmoduls eine Sterilisiereinrichtung angeordnet ist,
- Fig. 6: eine schematische Darstellung zur Verwendung von sterilen Kanälen zur Verbindung einer Heizeinrichtung und eines Blasrades sowie des Blasrades und einer Ausgabestrecke,
- Fig. 7: eine schematische Darstellung zur Veranschaulichung einer Zuführung von sterilem Gas entlang einer Transportstrecke für die vorformlinge,
- Fig. 8: eine gegenüber Fig. 7 abgewandelte Ausführungsform,
- Fig. 9: einen Querschnitt durch einen sterilen Transportbereich,
- Fig. 10: einen Längsschnitt gemäß Schnittlinie X-X in Fig. 9,
- Fig. 11: einen Querschnitt durch eine zuführung von sterilem Gas im Bereich einer Flaschenausgabe und
- Fig. 12: einen Längsschnitt gemäß Schnittlinie XII-XII in Fig. 11.

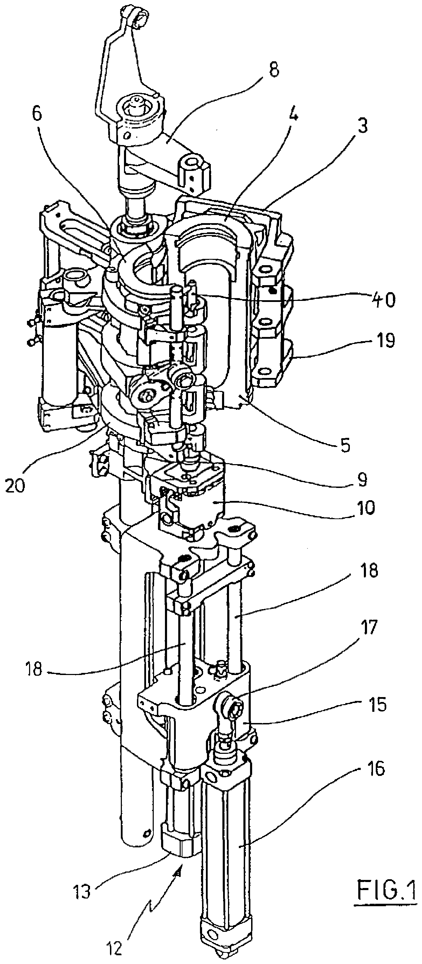

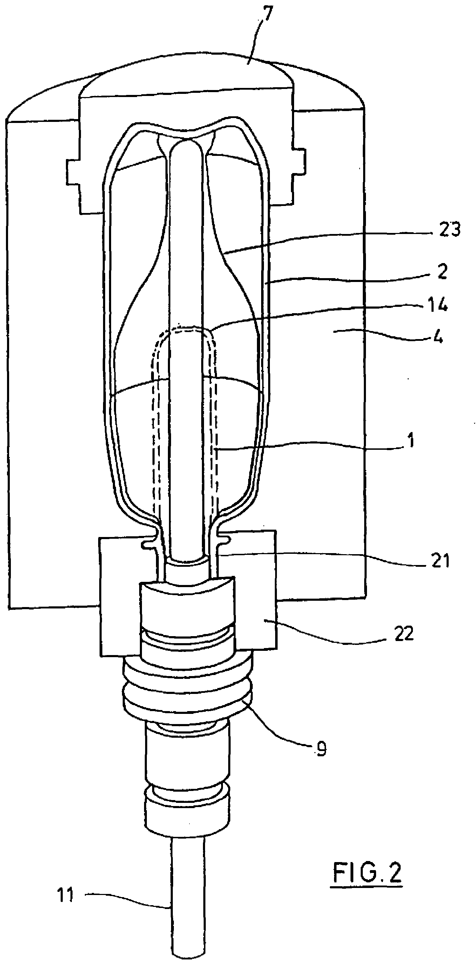

Der prinzipielle Aufbau einer Vorrichtung zur Umformung von Vorformlingen (1) in Behälter (2) ist in Fig. 1 und in Fig. 2 dargestellt.

Die Vorrichtung zur Formung des Behälters (2) besteht im wesentlichen aus einer Blasstation (3), die mit einer Blasform (4) versehen ist, in die ein Vorformling (1) einsetzbar ist. Der Vorformling (1) kann ein spritzgegossenes Teil aus polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der Vorformling (1) kann im Bereich der Blasstation (3) von einem Transportdorn (9) gehalten sein, der gemeinsam mit dem vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (4) einzusetzen.

Zur Ermöglichung einer Druckluftzuleitung ist unterhalb des Transportdornes (9) ein Anschlußkolben (10) angeordnet, der dem vorformling (1) Druckluft zuführt und gleichzeitig eine Abdichtung relativ zum Transportdorn (9) vornimmt. Bei einer abgewandelten Konstruktion ist es grundsätzlich aber auch denkbar, feste Druckluftzuleitungen zu verwenden.

Eine Reckung des Vorformlings (1) erfolgt mit Hilfe einer Reckstange (11), die von einem Zylinder (12) positioniert wird. Grundsätzlich ist es aber auch denkbar, eine mechanische Positionierung der Reckstange (11) über Kurvensegmente durchzuführen, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad angeordnet sind. Eine Verwendung von Zylindern (12) ist zweckmäßig, wenn ortsfest angeordnete Blasstationen (3) vorgesehen sind.

Bei der in Fig. 1 dargestellten Ausführungsform ist das Recksystem derart ausgebildet, daß eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, daß von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schießen der im Bereich von Trägern (19, 20) angeordneten Formhälften (5, 6) erfolgt eine Verriegelung der Träger (19, 20) relativ zueinander mit Hilfe einer Verriegelungseinrichtung (40).

Zur Anpassung an unterschiedliche Formen eines Mündungsabschnittes (21) des vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den vorformling (1) und schematisch eine sich entwickelnde Behälterblase (23).

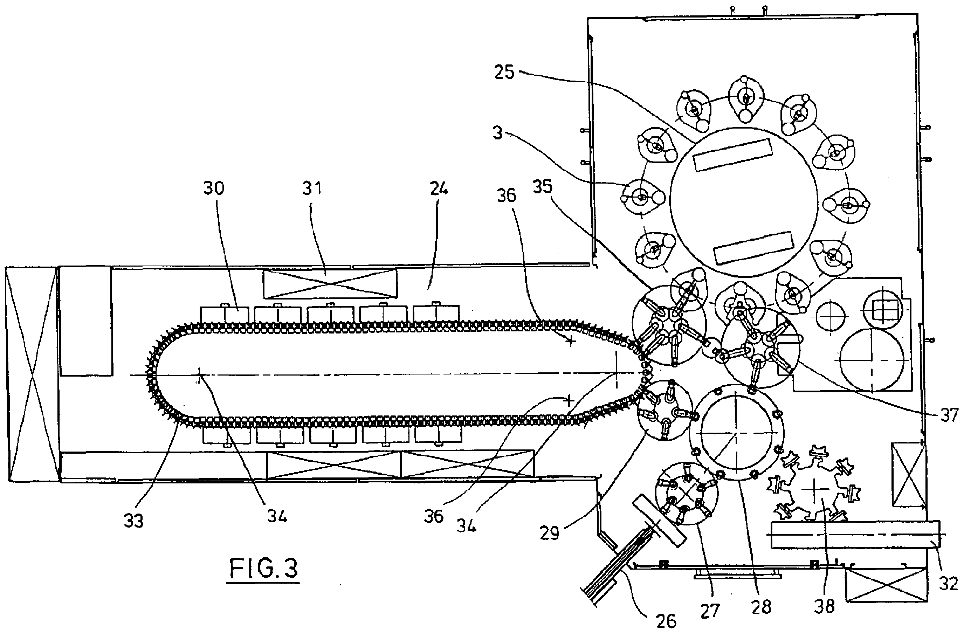

Fig. 3 zeigt den grundsätzlichen Aufbau einer Blasmaschine, die mit einer Heizstrecke (24) sowie einem rotierenden Blasrad (25) versehen ist. Ausgehend von einer Vorformlingseingabe (26) werden die Vorformlinge (1) von Übergaberädern (27, 28, 29) in den Bereich der Heizstrecke (24) transportiert. Entlang der Heizstrecke (24) sind Heizstrahler (30) sowie Gebläse (31) angeordnet, um die vorformlinge (1) zu temperieren. Nach einer ausreichenden Temperierung der Vorformlinge (1) werden diese an das Blasrad (25) übergeben, in dessen Bereich die Blasstationen (3) angeordnet sind. Die fertig geblasenen Behälter (2) werden von weiteren Übergaberädern einer Ausgabestrecke (32) zugeführt.

Um einen vorformling (1) derart in einen Behälter (2) umformen zu können, daß der Behälter (2) Materialeigenschaften aufweist, die eine lange verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, daß bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im wesentlichen rechteckförmige Grundkontur aufzuspannen. Bei der dargestellten Ausführungsform werden im Bereich der dem Übergaberad (29) und einem Eingaberad (35) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (29) und des Eingaberades (35) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heizstrecke (24) und das größere Umlenkrad (34) im unmittelbaren Übergabebereich zum Übergaberad (29) und zum Eingaberad (35). Alternativ zur Verwendung von kettenartigen Transportelementen (33) ist es beispielsweise auch möglich, ein rotierendes Heizrad zu verwenden.

Nach einem fertigen Blasen der Behälter (2) werden diese von einem Entnahmerad (37) aus dem Bereich der Blasstationen (3) herausgeführt und über das Übergaberad (28) und ein Ausgaberad (38) zur Ausgabestrecke (32) transportiert.

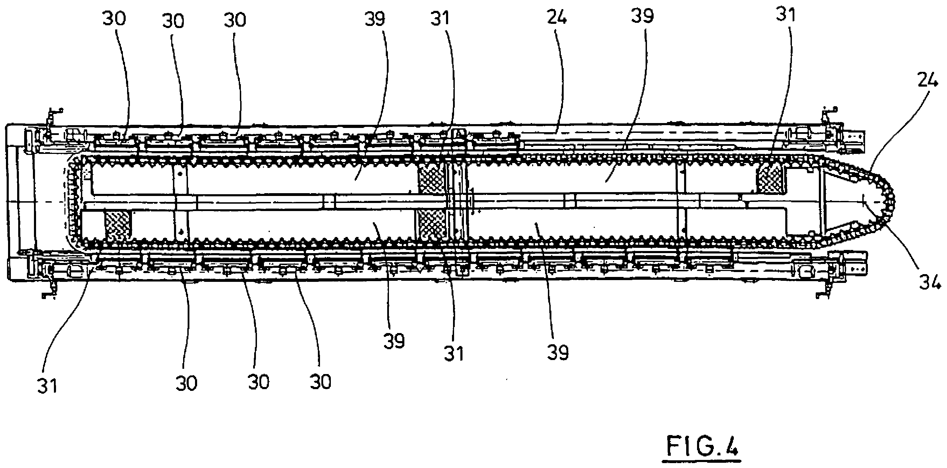

In der in Fig. 4 dargestellten modifizierten Heizstrecke (24) können durch die größere Anzahl von Heizstrahlern (30) eine größere Menge von Vorformlingen (1) je Zeiteinheit temperiert werden. Die Gebläse (31) leiten hier Kühlluft in den Bereich von Kühlluftkanälen (39) ein, die den zugeordneten Heizstrahlern (30) jeweils gegenüberliegen und über Ausströmöffnungen die Kühlluft abgeben. Durch die Anordnung der Ausströmrichtungen wird eine Strömungsrichtung für die Kühlluft im wesentlichen quer zu einer Transportrichtung der Vorformlinge (1) realisiert. Die Kühlluftkanäle (39) können im Bereich von den Heizstrahlern (30) gegenüberliegenden Oberflächen Reflektoren für die Heizstrahlung bereitstellen, ebenfalls ist es möglich, über die abgegebene Kühlluft auch eine Kühlung der Heizstrahler (30) zu realisieren.

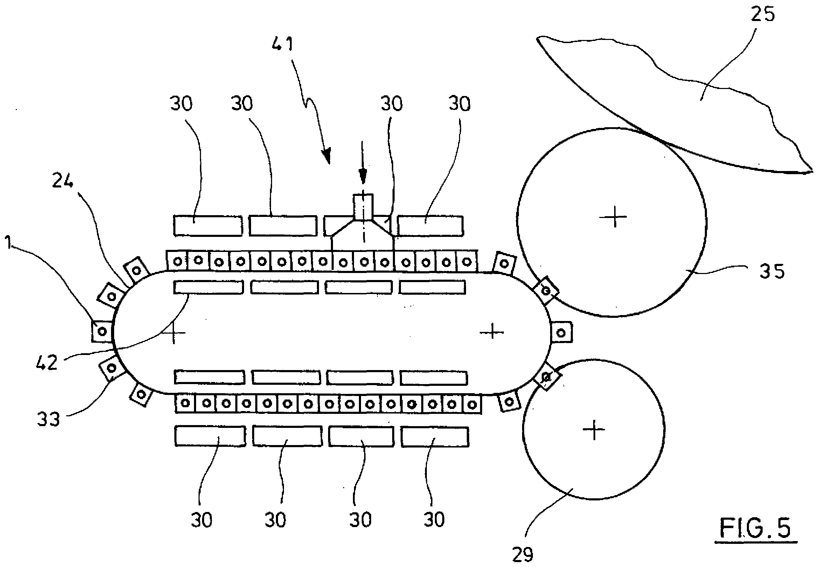

Fig. 5 zeigt schematisch und stark vereinfacht eine Anordnung ähnlich zur Darstellung in Fig. 3 mit zusätzlicher Anordnung einer Sterilisiereinrichtung (41) im Bereich der Heizstrecke (24). Zusätzlich eingezeichnet sind die Transportelemente (33) der Heizstrecke (24).

Das Sterilisationsmittel wird vorzugsweise in einem gasförmigen Zustand in den Vorformling (1) eingeleitet. Insbesondere ist an eine Temperatur des Sterilisationsmittels von oberhalb 100°C gedacht. Vorzugsweise weist der vorformling (1) bei der Durchführung des Sterilisationsvorganges im Bereich seiner zu sterilisierenden inneren Oberfläche eine Temperatur von oberhalb 80°C auf. Hinsichtlich des Sterilisationsmittels ist insbesondere an die Verwendung von Wasserstoffperoxid gedacht.

Fig. 5 veranschaulicht die Anordnung des Vorformlings (1) während der Durchführung des Sterilisationsvorganges im Bereich der Heizstrecke (24). Der Vorformling (1) wird hierbei sowohl vom Sterilisationsmittel als auch von Heizstrahlern (30) beaufschlagt. Vorzugsweise erfolgt die Beaufschlagung des Vorformlings (1) mit dem Sterilisationsmittel im Bereich der inneren Oberfläche des Vorformlings (1) und eine Beaufschlagung mit der Heizstrahlung im Bereich einer äußeren Oberfläche. Beim dargestellten Ausführungsbeispiel sind die Heizstrahler (30) entlang einer Transportrichtung der Vorformlinge (1) durch die Heizstrecke (24) einseitig angeordnet. Den Heizstrahlern (30) gegenüberliegend sind Reflektoren (42) positioniert. Typischerweise werden die Heizstrahler (30) im Bereich von Heizkästen angeordnet, wobei auf einer den vorformlingen (1) abgewandten Seite der Heizstrahler (30) vom Heizkasten gehalterte Reflektoren angeordnet sind. Vorzugsweise weisen die Reflektoren ein Reflektionsprofil auf. Zwischen den Heizstrahlern (30) und den vorformlingen (1) kann eine Filterscheibe positioniert werden, die frequenzselektive Eigenschaften aufweist. Die Filterscheibe kann beispielsweise aus Quarzglas bestehen.

Vorzugsweise generieren die Heizstrahler (30) eine Heizstrahlung im NIR-Bereich. Verwendbar sind aber auch Infrarot-Strahler, lichtemittierende Dioden oder Strahleinrichtungen für Mikrowellenenergie oder Hochfrequenz-Energie.

Gegebenenfalls ist auch eine Kombination von zwei oder mehr der vorstehend aufgeführten Wärmequellen möglich.

Gemäß typischen Prozeßbedingungen weist das Sterilisationsmittel während der Durchführung der Sterilisierung eine Temperatur im Bereich von 100°C bis 130°C auf. Der Vorformling (1) weist während der Durchführung der Sterilisierung mindestens im Bereich seiner inneren Oberfläche eine Temperatur von 100°C bis 130°C auf. Eine typische Sterilisationsdauer beträgt etwa 0,1 bis 0,5 sec. Als Sterilisationsmittel wird bevorzugt verdampftes Wasserstoffperoxid verwendet, das mit Heißluft gemischt wird. Die Wasserstoffperoxidkonzentration beträgt dabei etwa 15 bis 35 Gewichtsprozent.

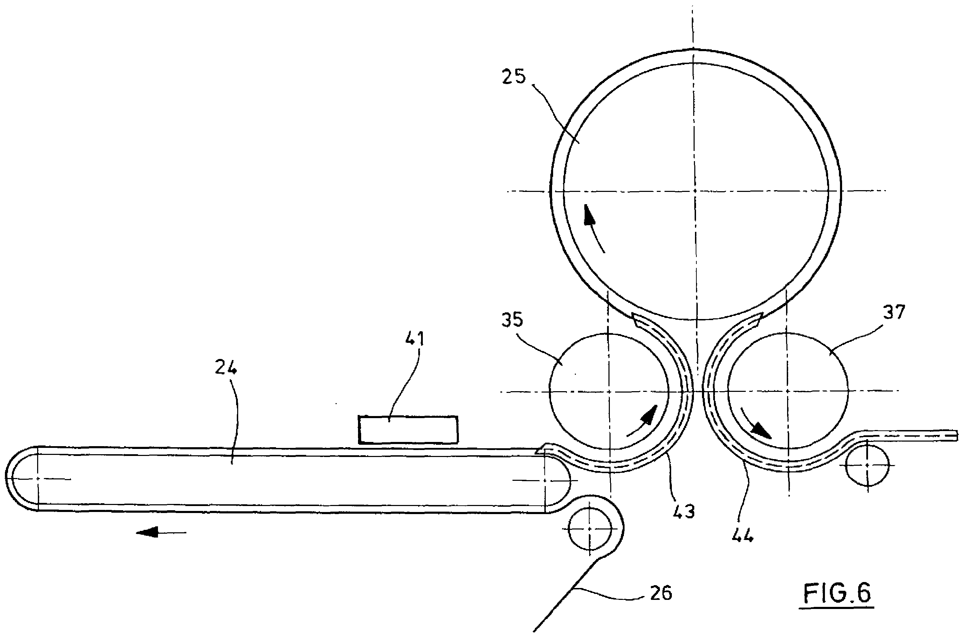

Fig. 6 zeigt eine schematische Darstellung ähnlich zur Darstellung in Fig. 3, jedoch stärker schematisiert. Die Vorformlinge (1) werden hier im Bereich der Heizstrecke (24) erwärmt und von der Sterilisiereinrichtung (41) sterilisiert. Die Heizstrecke (24) ist mindestens in der entsprechenden Transportrichtung der Vorformlinge (1) zwischen der Sterilisiereinrichtung (41) und dem Eingaberad (35) als Sterilbereich ausgeführt. Ausgehend vom Ende der Sterilisiereinrichtung (41) bzw. des Sterilbereiches der Heizstrecke (24) erstreckt sich in Richtung auf das Blasrad (25) ein Kanal (43). Der Kanal (43) dient dazu, den vorformling (1) mindestens abschnittsweise mit einem sterilen Gas derart zu umgeben, daß eine Kontamination des Vorformling (1) mit Keimen entlang des Transportweges ausgeschlossen ist. Im Bereich des Blasrades (25) wird der vorformling (1) in eine Blasstation (3) eingesetzt. Auch hier wird für eine ausreichend sterile Handhabung des Vorformlings (1) gesorgt.

Sobald der Vorformling (1) im Eingabebereich der Heizung (24) vom zugeordneten Transportelement gehaltert wird, ist insbesondere daran gedacht, in den Mündungsabschnitt des Vorformlings (1) ein Halteelement einzuführen, das einen Innenraum des Vorformlings (1) gegenüber einer Umgebung abdichtet und hierdurch vor einer Kontamination mit Keimen aus der Umgebungsluft schützt. Das entsprechende Dichtelement kann auch als Transportelement für den Vorformling (1) ausgebildet sein. Insbesondere ist daran gedacht, durch das Dichtelement hindurch das Sterilisationsmittel in den Innenraum des Vorformlings (1) einzuführen. Vorzugsweise ist dies ein Gemisch aus Wasserstoffperoxid und Luft. Nach einem Verlassen der Sterilisiereinrichtung (41) bleibt der Innenraum des Vorformlings (1) durch das Halteelement gegenüber einer Umgebung abgedichtet und vor einer Kontamination geschützt.

Erst nach einer Trennung von Halteelement und Vorformling (1) ist der Innenraum des Vorformlings (1) für eine Kontamination aus der Umgebungsluft zugänglich. Vorzugsweise erfolgt ab dieser Trennung von Halteelement und Vorformling (1) die Anordnung des Kanals (43).

Ein Ausgabebereich des Blasrades (25) ist zumindest entlang des Entnahmerades (37) ebenfalls mit einem Kanal (44) ausgestattet, der in gleicher weise wie der Kanal (43) einen ausreichend groß dimensionierten Reinraum bereitstellt, durch den in diesem Fall die geblasenen Behälter (2) mindestens bereichsweise transportiert werden.

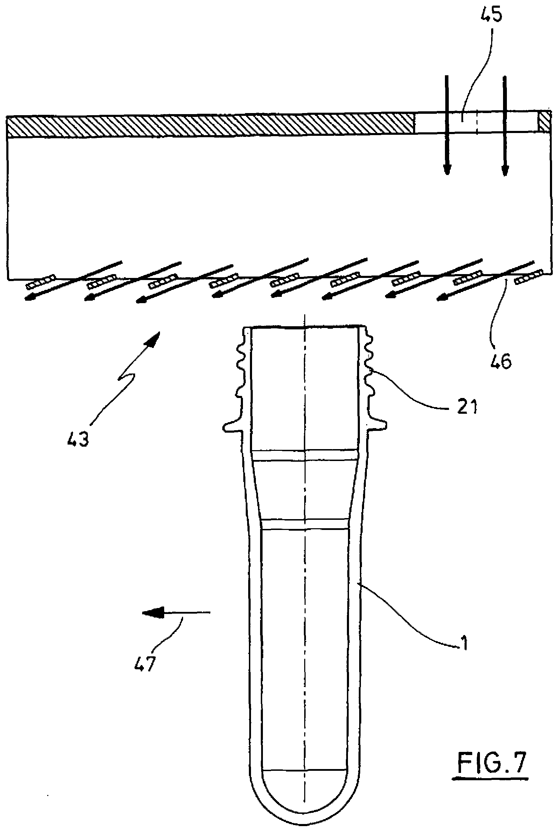

Fig. 7 zeigt in einer Querschnittdarstellung ein Vorformling (1), der entlang des Kanals (43) geführt ist. Der Kanal (43) weist eine Zuführöffnung (45) für ein steriles Gas und eine Mehrzahl von Ausströmöffnungen (46) auf. Beim dargestellten Ausführungsbeispiel sind die Ausströmöffnungen (46) schräg zu einer vertikalen Richtung angeordnet. Dies führt zu einer Ausbreitungskomponente des aus dem Kanal (43) ausströmenden sterilen Gases in einer Transportrichtung (47) der Vorformlinge (1). Hierdurch wird eine Strömung des sterilen Gases in Richtung auf einen Eingabebereich des Blasrades (25) generiert, so daß ein Einsetzen der Vorformlinge (1) in die Blasstation (3) in einer sterilen Umgebung unterstützt wird.

Das sterile Gas strömt aus dem Kanal (43) derart aus, daß wenigstens der Mündungsabschnitt (21) des vorformlings (1) innerhalb des sterilen Gases positioniert ist, so daß ein Zutritt von Keimen verhindert wird.

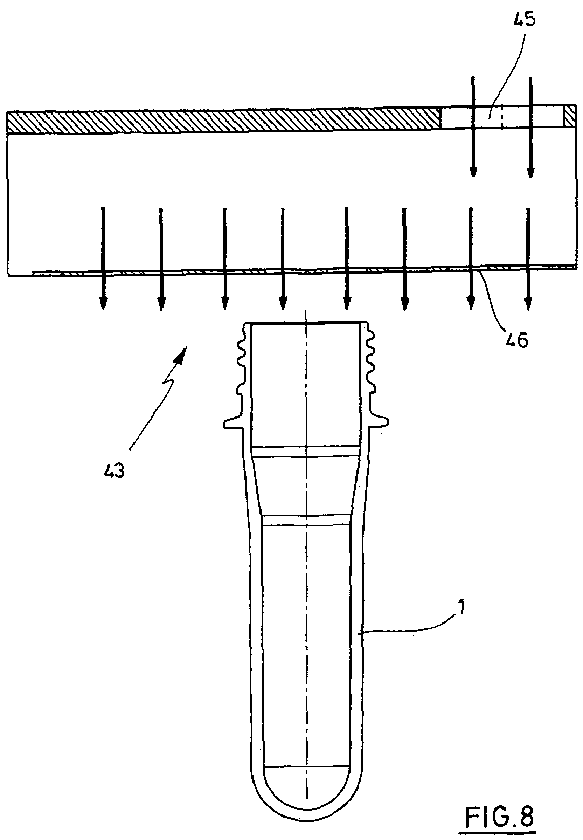

Fig. 8 zeigt eine Ausführungsform, bei der das sterile Gas im Wesentlichen in einer vertikalen Richtung aus dem Kanal (43) austritt. Insbesondere ist hier daran gedacht, eine laminare Strömung bereitzustellen. Ein Mitreißen nicht steriler Umgebungsluft wird hierdurch vermieden.

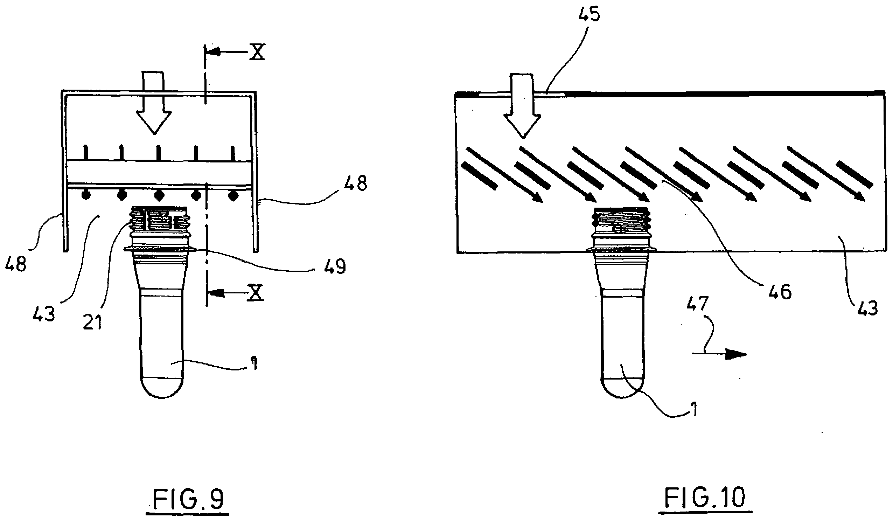

Fig. 9 zeigt eine gegenüber der Ausführungsform in Fig. 7 abgewandelte Konstruktion. Es werden hier zusätzliche Seitenwände (48) verwendet, die den Bereich des Kanals (43), der den Mündungsabschnitt (21) umgibt, seitlich begrenzen. Hierdurch wird die Strömungsführung des sterilen Gases unterstützt. Gemäß einer weiteren nicht zeichnerisch dargestellten Ausführungsform wird der Kanal (43) auch in lotrechter Richtung nach unten durch eine Wandung derart begrenzt, daß der Mündungsabschnitt (21) innerhalb dieses abgegrenzten Bereiches geführt ist. Hierdurch wird zum Einen die Führung des sterilen Gases nochmals unterstützt, darüber hinaus wird eine Strömung von sterilem Gas in einen Bereich des Vorformlings (1) unterhalb eines Stützringes (49) reduziert. Die entsprechende Begrenzung des Kanals (43) erstreckt sich hierbei beispielsweise in Richtung auf den Stützring (49) oder endet unterhalb des Stützringes (499).

Fig. 10 veranschaulicht nochmals die Strömungsführung des sterilen Gases innerhalb des Kanals (43).

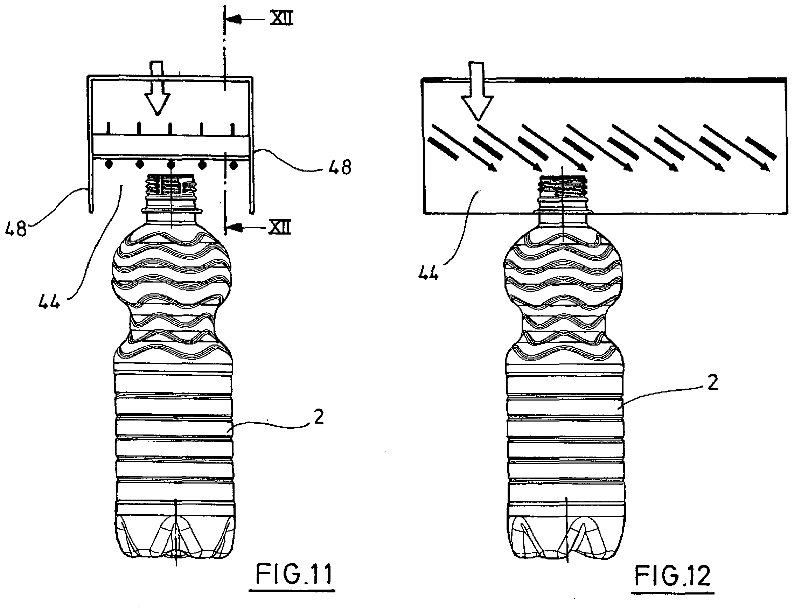

Fig. 11 und Fig. 12 veranschaulichen die Konstruktion des Kanals (44) zur Bereitstellung einer lokal begrenzten sterilen Umgebung für geblasene Behälter (2). Die Konstruktion des Kanals (44) ist im Wesentlichen gleich zur Konstruktion des Kanals (43). In gleicher Weise wie der Kanal (43) kann der Kanal (44) optional mit einer oder zwei Seitenwandungen (48) versehen werden oder zusätzlich auch vollständig oder abschnittsweise in lotrechter Richtung nach unten durch Wandungen begrenzt sein.

Der Kanal (44) erstreckt sich vorzugsweise ausgehend vom Blasrad (25) bis in den Bereich einer Fülleinrichtung zur Befüllung der Behälter (2) mit einem Produkt. Es wird hierdurch für den gesamten Transportbereich des Behälters (2) eine ausreichend sterile Umgebung bereitgestellt.

Im Bereich der Blasstationen (3) werden vorzugsweise nur diejenigen Bereiche steril gehalten, die mit dem Mündungsabschnitt (21) oder einem Innenraum des Vorformlings (1) bzw. des Behälters (2) in Berührung kommen. Hinsichtlich der weiteren Bereiche des Vorformlings (1) bzw. des Behälters (2) werden hingegen keine Anforderungen an eine besondere Sterilität gestellt. Durch diese örtliche lokal begrenzte Sterilität wird berücksichtigt, daß nach einer Befüllung der Behälter (2) mit dem abzufüllenden Produkt durch einen entsprechenden Verschluß der befüllte Innenraum des Behälters (2) steril gegenüber einer Umgebung abgegrenzt ist. Eventuell an einer äußeren Oberfläche anhaftende Keime können somit nicht in den Bereich des abgefüllten Produktes gelangen.

Die Vorformlinge (1) oder Behälter (2) können somit entweder entlang eines Kanals (43, 44) transportiert werden, aus dem das sterile Gas in Richtung auf die Vorformlinge (1) oder Behälter (2) ausströmt, oder die Vorformlinge (1) oder Behälter (2) können ganz oder teilweise innerhalb des sterilen Kanals (43, 44) transportiert werden.

## Patentansprüche

1. Verfahren zur Herstellung von blasgeformten mindestens bereichsweise sterilen Behältern, bei dem ein Vorformling aus einem thermoplastischen Material zunächst erwärmt und dann mit einem unter Druck stehenden Fluid beaufschlagt wird, sowie bei dem ein Sterilisationsmittel in den Bereich des Vorformlings zugeführt wird, wobei das Sterilisieren mit einem räumlichen Abstand zu einer den Vorformling (1) verformenden Blasstation (3) durchgeführt wird, **dadurch gekennzeichnet, dass** der Vorformling (1) vom Ort des Sterilisierens bis zur Blasstation (3) mindestens entlang eines Teiles eines Transportweges entlang eines sterilen Kanals (43) transportiert wird, wobei der Vorformling (1) entweder entlang eines Kanals (43) transportiert wird, aus dem das sterile Gas in Richtung auf den Vorformling (1) ausströmt, wobei das sterile Gas in Richtung auf einen Mündungsabschnitt (21) des Vorformlings (1) geleitet wird, oder der Vorformling (1) wird ganz oder teilweise innerhalb des sterilen Kanals (43, 44) transportiert, wobei der Vorformling (1) innerhalb des Kanals (43) von einem sterilen Gas beaufschlagt wird, wobei das sterile Gas in Richtung auf einen Mündungsabschnitt (21) des Vorformlings (1) geleitet wird.

2. Verfahren nach Anspruch 1, **dadurch gekennzeichnet, dass** mindestens ein Teil des sterilen Gases innerhalb des Kanals (43) mit einer Ausbreitungskomponente einer Strömung in einer Längsrichtung des Kanals (43) strömt.

3. Verfahren nach Anspruch 2, **dadurch gekennzeichnet, dass** das sterile Gas mit einer Ausbreitungskomponente in Richtung auf die Blaseinrichtung strömt.

4. Verfahren nach einem der Ansprüche 1 bis 3, **dadurch gekennzeichnet, dass** die blasgeformten Behälter nach einer Entnahme aus der Blaseinrichtung mindestens abschnittsweise und mindestens bereichsweise entlang eines sterilen Kanals (44) transportiert werden.

5. Verfahren nach Anspruch 4, **dadurch gekennzeichnet, dass** der Behälter (2) entweder entlang des Kanals (44) transportiert wird, aus dem das sterile Gas in Richtung auf den Behälter (2) ausströmt, wobei das sterile Gas in Richtung auf einen Mündungsabschnitt (21) des Behälters (2) geleitet wird, oder der Behälter (2) wird ganz oder teilweise innerhalb des sterilen Kanals (44) transportiert, wobei der Behälter (2) innerhalb des Kanals (44) von einem sterilen Gas beaufschlagt wird, wobei das sterile Gas in Richtung auf einen Mündungsabschnitt (21) des Behälters (2) geleitet wird.

6. Verfahren nach Anspruch 5, **dadurch gekennzeichnet, dass** durch den sterilen Kanal (44) die Blaseinrichtung mit einer Fülleinrichtung verbunden wird.

7. Vorrichtung zur Herstellung von mindestens bereichsweise sterilen blasgeformten Behältern, die eine Zuführeinrichtung zur Beaufschlagung mindestens eines Teiles eines Vorformlings mit einem Sterilisationsmittel aufweist, sowie die mit einer Heizstrecke zur Temperierung der Vorformlinge und einer Blaseinrichtung zur Blasverformung der Vorformlinge in die Behälter versehen ist, wobei eine den Vorformling (1) mit dem Sterilisationsmittel beaufschlagende Sterilisiereinrichtung (41) mit einem räumlichen Abstand zur Blaseinrichtung angeordnet ist, **dadurch gekennzeichnet, dass** sich mindestens ein Teil eines Transportweges für die Vorformlinge (1) von der Sterilisiereinrichtung (41) zur Blaseinrichtung entlang eines sterilen Kanals (43) erstreckt, wobei der Kanal (43) einen Anschluss zur Zuführung eines sterilen Gases aufweist, wobei der Kanal (43) mindestens eine Ausströmöffnung (46) zur Abgabe des sterilen Gases in Richtung auf einen Mündungsabschnitt (21) des Vorformlings (1) aufweist, und wobei der Transport des Vorformlings (1) und die Anordnung und Ausbildung des Kanals (43) so ausgeführt ist, dass der Vorformling (1) entweder entlang des Kanals (43) transportiert wird, aus dem das sterile Gas in Richtung auf den Vorformling (1) ausströmt, wobei das sterile Gas in Richtung auf einen Mündungsabschnitt (21) des Vorformlings (1) geleitet wird, oder der Vorformling (1) wird ganz oder teilweise innerhalb des sterilen Kanals (43, 44) transportiert, wobei der Vorformling (1) innerhalb des Kanals (43) von einem sterilen Gas beaufschlagt wird, wobei das sterile Gas in Richtung auf einen Mündungsabschnitt (21) des Vorformlings (1) geleitet wird.

8. Vorrichtung nach Anspruch 7, **dadurch gekennzeichnet, dass** die Ausströmöffnung (46) derart ausgerichtet ist, dass das sterile Gas mit einer Ausbreitungskomponente in einer Längsrichtung des Kanals (43) strömt.

9. Vorrichtung nach Anspruch 8, **dadurch gekennzeichnet, dass** die Ausströmöffnung (46) derart ausgerichtet ist, dass das sterile Gas mit einer Ausbreitungskomponente in Richtung auf die Blaseinrichtung strömt.

10. Vorrichtung nach einem der Ansprüche 7 bis 9, **dadurch gekennzeichnet, dass** ein weiterer steriler Kanal (44) in einer Transportrichtung der Behälter (2) hinter der Blaseinrichtung angeordnet ist.

11. Vorrichtung nach Anspruch 10, **dadurch gekennzeichnet, dass** der Kanal (44) einen Anschluss zur Zuführung eines sterilen Gases aufweist, wobei der Kanal (44) mindestens eine Ausströmöffnung (46) zur Abgabe des sterilen Gases in Richtung auf einen Mündungsabschnitt (21) des Behälters (2) aufweist, und wobei der Transport des Behälters (2) und die Anordnung und Ausbildung des Kanals (44) so ausgeführt ist, dass der Behälter (2) entweder entlang des Kanals (44) transportiert wird, aus dem das sterile Gas in Richtung auf den Behälter (2) ausströmt, wobei das sterile Gas in Richtung auf einen Mündungsabschnitt (21) des Behälters (2) geleitet wird, oder der Behälter (2) wird ganz oder teilweise innerhalb des sterilen Kanals (44) transportiert, wobei der Behälter (2) innerhalb des Kanals (44) von einem sterilen Gas beaufschlagt wird, wobei das sterile Gas in Richtung auf einen Mündungsabschnitt (21) des Behälters (2) geleitet wird.

12. Vorrichtung nach Anspruch 11, **dadurch gekennzeichnet, dass** der Kanal (44) die Blaseinrichtung mit einer Fülleinrichtung verbindet.

## Claims

1. A method for producing blow-moulded containers, which are sterile at least in some areas, wherein a parison made of a thermoplastic material is first heated and a pressurized fluid is then applied thereto, and wherein a sterilisation means is fed into an area of the parison, wherein sterilisation is carried out at a spatial distance to a blowing station (3), which deforms the parison (1), **characterised in that** the parison (1) is transported from the site of the sterilisation to the blowing station (3), at least along a portion of a transport path, along a sterile channel (43), wherein the parison (1) is either transported along a channel (43), from which the sterile gas flows in the direction of the parison (1), wherein the sterile gas is guided in the direction of an opening section (21) of the parison (1), or the parison (1) is transported completely or partially inside the sterile channel (43, 44), wherein a sterile gas is applied to the parison (1) inside the channel (43), wherein the sterile gas is guided in the direction of an opening section (21) of the parison (1).

2. The method according to claim 1, **characterised in that** at least a portion of the sterile gas inside the channel (43) flows with an propagation component of a flow in a longitudinal direction of the channel (43).

3. The method according to claim 2, **characterised in that** the sterile gas flows with a propagation component in the direction of the blowing device.

4. The method according to any one of claims 1 to 3, **characterised in that** the blow-moulded containers, after removal from the blowing device, are transported at least in sections and at least in some areas along a sterile channel (44).

5. The method according to claim 4, **characterised in that** the container (2) is either transported along the channel (44), from which the sterile gas flows in the direction of the container (2), wherein the sterile gas is guided in the direction of an opening section (21) of the container (2), or the container (2) is transported completely or partially inside the sterile channel (44), wherein a sterile gas is applied to the container (2) inside the channel (44), wherein the sterile gas is guided in the direction of an opening section (21) of the container (2).

6. The method according to claim 5, **characterised in that** the blowing device is connected to a filling device by the sterile channel (44).

7. A device for producing blow-moulded containers, which are sterile at least in some areas, which device has a feed device for applying a sterilisation means to at least a portion of a parison, and which is provided with a heating section for bringing the parisons to the correct temperature, and a blowing device for blow moulding the parisons to form the containers, wherein a sterilisation device (41), which applies the sterilisation means to the parison (1), is arranged at a spatial distance from the blowing device, **characterised in that** at least a portion of a transport path for the parisons (1) extends from the sterilisation device (41) to the blowing device along a sterile channel (43), wherein the channel (43) has a connection for feeding a sterile gas, wherein the channel (43) has at least one outflow opening (46) for discharging the sterile gas in the direction of an opening section (21) of the parison (1), and wherein the transport of the parison (1) and the arrangement and embodiment of the channel (43) is embodied in such a way that the parison (1) is either transported along the channel (43), from which the sterile gas flows in the direction of the parison (1), wherein the sterile gas is guided in the direction of an opening section (21) of the parison (1), or the parison (1) is transported completely or partially inside the sterile channel (43, 44), wherein a sterile gas is applied to the parison (1) inside the channel (43), wherein the sterile gas is guided in the direction of an opening section (21) of the parison (1).

8. The device according to claim 7, **characterised in that** the outflow opening (46) is oriented in such a way that the sterile gas flows with a propagation component in a longitudinal direction of the channel (43).

9. The device according to claim 8, **characterised in that** the outflow opening (46) is oriented in such a way that the sterile gas flows with a propagation component in the direction of the blowing device.

10. The device according to any one of claims 7 to 9, **characterised in that** a further sterile channel (44) is arranged downstream from the blowing device in a transport direction of the containers (2).

11. The device according to claim 10, **characterised in that** the channel (44) has a connection for feeding a sterile gas, wherein the channel (44) has at least one outflow opening (46) for discharging the sterile gas in the direction of an opening section (21) of the container (2), and wherein the transport of the container (2) and the arrangement and embodiment of the channel (44) is embodied in such a way the container (2) is either transported along the channel (44), from which the sterile gas flows in the direction of the container (2), wherein the sterile gas is guided in the direction of an opening section (21) of the container (2), or the container (2) is transported completely or partially inside the sterile channel (44), wherein a sterile gas is applied to the container (2) inside the channel (44), wherein the sterile gas is guided in the direction of an opening section (21) of the container (2).

12. The device according to claim 11, **characterised in that** the channel (44) connects the blowing device to a filling device.

## Revendications

1. Procédé de fabrication de récipients au moins partiellement stériles moulés par soufflage dans le cadre duquel une préforme en un matériau thermoplastique est d'abord chauffée puis soumise à l'action d'un fluide sous pression, et dans le cadre duquel un agent de stérilisation est amené dans la zone de la préforme, la stérilisation ayant lieu à distance d'une station de soufflage (3) qui transforme la préforme (1), **caractérisé en ce que,** de l'endroit où a lieu la stérilisation jusqu'à la station de soufflage (3), la préforme (1) est, le long d'une partie au moins d'un parcours, transportée le long d'un canal stérile (43), la préforme (1) étant soit transportée le long d'un canal (43) d'où le gaz stérile s'échappe en direction de la préforme (1), le gaz stérile étant dirigé en direction d'une section d'embouchure (21) de la préforme (1), soit la préforme (1) est entièrement ou partiellement transportée à l'intérieur du canal stérile (43, 44), la préforme (1) étant soumise à l'action d'un gaz stérile à l'intérieur du canal (43) et le gaz stérile étant dirigé en direction d'une section d'embouchure (21) de la préforme (1).

2. Procédé selon la revendication 1, **caractérisé en ce qu'**une partie au moins du gaz stérile s'écoule à l'intérieur du canal (43) avec une composante de propagation du courant dans le sens longitudinal du canal (43).

3. Procédé selon la revendication 2, **caractérisé en ce que** le gaz stérile s'écoule avec une composante de propagation en direction du dispositif de soufflage.

4. Procédé selon l'une des revendications 1 à 3, **caractérisé en ce que** les récipients moulés par soufflage, après leur extraction du dispositif de soufflage, sont sur une partie au moins de leur parcours et au moins partiellement transportés le long d'un canal stérile (44).

5. Procédé selon la revendication 4, **caractérisé en ce que** le récipient (2) est soit transporté le long du canal (44) d'où le gaz stérile s'échappe en direction du récipient (2), le gaz stérile étant dirigé en direction d'une section d'embouchure (21) du récipient (2), soit le récipient (2) est entièrement ou partiellement transporté à l'intérieur du canal stérile (44), le récipient (2) étant soumis à l'action d'un gaz stérile à l'intérieur du canal (44) et le gaz stérile étant dirigé en direction d'une section d'embouchure (21) du récipient (2).

6. Procédé selon la revendication 5, **caractérisé en ce que** le dispositif de soufflage est relié par le canal (44) à un dispositif de remplissage.

7. Dispositif de fabrication de récipients au moins partiellement stériles moulés par soufflage doté d'un système d'adduction d'un agent de stérilisation agissant sur au moins une partie d'une préforme et muni d'une zone de chauffage pour tempérer les préformes et d'un dispositif de soufflage pour la transformation des préformes en récipients par moulage par soufflage, un dispositif de stérilisation (41) qui soumet la préforme (1) à l'action d'un agent de stérilisation étant agencé à distance du dispositif de soufflage, **caractérisé en ce qu'**une partie au moins d'un parcours des préformes (1) s'étend du dispositif de stérilisation (41) au dispositif de soufflage le long d'un canal stérile (43), le canal (43) présentant un branchement pour l'adduction d'un gaz stérile et au moins un orifice d'échappement (46) pour le dégagement du gaz stérile en direction d'une section d'embouchure (21) de la préforme (1) et le transport de la préforme (1) et l'agencement et la conformation du canal (43) étant tels que la préforme (1) est soit transportée le long d'un canal (43) d'où le gaz stérile s'échappe en direction de la préforme (1), le gaz stérile étant dirigé en direction d'une section d'embouchure (21) de la préforme (1), soit la préforme (1) est entièrement ou partiellement transportée à l'intérieur du canal stérile (43, 44), la préforme (1) étant soumise à l'action d'un gaz stérile à l'intérieur du canal (43) et le gaz stérile étant dirigé en direction d'une section d'embouchure (21) de la préforme (1).

8. Dispositif selon la revendication 7, **caractérisé en ce que** l'orifice d'échappement (46) est orienté de façon telle que le gaz stérile s'écoule avec une composante de propagation dans le sens longitudinal du canal (43).

9. Dispositif selon la revendication 8, **caractérisé en ce que** l'orifice d'échappement (46) est orienté de façon telle que le gaz stérile s'écoule avec une composante de propagation en direction du dispositif de soufflage.

10. Dispositif selon l'une des revendications 7 à 9, **caractérisé en ce que** un canal stérile (44) supplémentaire est agencé dans un sens de transport des récipients (2) derrière le dispositif de soufflage.

11. Dispositif selon la revendication 10, **caractérisé en ce que** le canal (44) présente un branchement pour l'adduction d'un gaz stérile et au moins un orifice d'échappement (46) pour le dégagement du gaz stérile en direction d'une section d'embouchure (21) du récipient (2), le transport du récipient (2) et l'agencement et la conformation du canal (44) étant tels que le récipient (2) est soit transporté le long du canal (44) d'où le gaz stérile s'échappe en direction du récipient (2), le gaz stérile étant dirigé en direction d'une section d'embouchure (21) du récipient (2), soit le récipient (2) est entièrement ou partiellement transporté à l'intérieur du canal stérile (44), le récipient (2) étant soumis à l'action d'un gaz stérile à l'intérieur du canal (44) et le gaz stérile étant dirigé en direction d'une section d'embouchure (21) du récipient (2).

12. Dispositif selon la revendication 11, **caractérisé en ce que** le canal (44) relie le dispositif de soufflage à un dispositif de remplissage.
